(19) Europäisches Patentamt
European Patent Office
Office européen des brevets

(11) EP 1 034 217 B1

(12) EUROPÄISCHE PATENTSCHRIFT

(45) Veröffentlichungstag und Bekanntmachung des Hinweises auf die Patenterteilung:
**15.09.2004 Patentblatt 2004/38**

(21) Anmeldenummer: **98963348.2**

(22) Anmeldetag: **06.11.1998**

(51) Int Cl.7: **C08K 9/04**, C09C 3/08, C09C 1/36

(86) Internationale Anmeldenummer:
**PCT/DE1998/003327**

(87) Internationale Veröffentlichungsnummer:
**WO 1999/027011 (03.06.1999 Gazette 1999/22)**

# (54) PHOSPHONATOSILOXANBEHANDELTE ANORGANISCHE PARTIKEL

INORGANIC PARTICLES TREATED WITH PHOSPHONATOSILOXANE

PARTICULES INORGANIQUES TRAITEES AU PHOSPHONATOSILOXANE

(84) Benannte Vertragsstaaten:
**BE DE DK ES FI FR GB IT NL**

(30) Priorität: **22.11.1997 DE 19751857**

(43) Veröffentlichungstag der Anmeldung:
**13.09.2000 Patentblatt 2000/37**

(73) Patentinhaber: **KRONOS TITAN GmbH**
**51373 Leverkusen (DE)**

(72) Erfinder:
- **ELFENTHAL, Lothar**
**D-40764 Langenfeld (DE)**
- **LUGINSLAND, Hans-Hermann**
**D-51377 Leverkusen (DE)**

(56) Entgegenhaltungen:
**EP-A- 0 707 051**
**DE-A- 3 015 766**
**US-A- 4 328 041**
**US-A- 5 156 677**
**WO-A-97/12944**
**GB-A- 1 442 756**
**US-A- 4 344 799**

- **DATABASE WPI Section Ch, Week 8736 Derwent Publications Ltd., London, GB; Class D21, AN 87-254706 XP002900440 & JP 62 177070 A (PILOT INK CO LTD) , 3. August 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft anorganische Partikel, beschichtet mit wenigstens einer reaktiven Organosilanverbindung, ein Verfahren zur Herstellung phosphonatosiloxanbehandelter anorganischer Partikel und deren Verwendung.

Damit sich anorganische Partikel in eine (Kunststoff-) Matrix gleichmäßig verteilen und einbauen lassen, kann es erforderlich sein, die Oberfläche der Partikel zu modifizieren. Eine anorganische Partikel, wie beispielsweise ein Titandioxidpigment, hat von Haus aus hydrophile Eigenschaften und es sollte, damit es beispielsweise in Polyethylen optimal verteilt werden kann, einen hydrophoben Charakter aufweisen. Eine solche Modifizierung der Partikel wird gewöhnlich durch eine Umhüllung mit einer organischen Substanz erreicht ("organische Behandlung"). Um eine gegen Ablösung stabile Beschichtung zu erreichen, muss die organische Substanz an die Partikel chemisch gebunden sein, was spezielle Maßnahmen erfordert.

In einer Firmenschrift der Hüls AG "Anwendungen von organofunktionellen Silanen - DYNASILAN" (1989) Seite 10 ff. ist die Behandlung von Partikeln mit organofunktionellen Silanen beschrieben: ausgehend von einem Silan, substituiert mit wenigstens einem organischen Rest und mit siliciumfunktionellen Resten, wird über eine Hydrolyse Silicium über Sauerstoff an der Pigmentoberfläche fixiert (chemisch gebunden), wobei es auch zu einer Oligomerisierung kommt, d. h. zu einer Ausbildung einer Polysiloxan-Netzstruktur, und somit zu einer wirkungsvollen Umhüllung der Pigmentoberfläche. Der organische Substituent direkt am Siliciumatom, beispielsweise ein Oktylrest, bewirkt, dass das Pigmentteilchen hydrophobe Eigenschaften und eine gute Dispergierbarkeit aufweist.

Auch eine Nachbehandlung einer anorganischen Partikel mit organischen Phosphorverbindungen verbessert in der Regel die Dispergierbarkeit und verändert das hydrophile Verhalten.

In der DE AS 12 34 234 wird vorgeschlagen, zur Verbesserung der Dispergierbarkeit die Partikel mit einer sauren organischen Phosphorverbindung, wie beispielsweise einem mono- oder diorthophosphorsauren Ester, zu beschichten. So lassen sich zwar organische Reste an eine Partikeloberfläche binden, eine netzartige Umhüllung lässt sich mit solchen phosphororganischen Gruppen nicht erreichen.

In der DE 30 15 766 A sind Pigmente mit Phosphoropolysiloxanen beschichtet; die Phosphorgruppe trägt keine organischen Substituenten, das Verfahren ist aufwendig, und es ist keine Steuerung der Hydrophobizität möglich.

In der DE 15 92 905 oder der EP 0 496 150 werden zur Verbesserung der Dispergierbarkeit in einem organischen oder wässrigen Medium Titandioxidpigmente mit Phosphorsäureestem der allgemeinen Formel

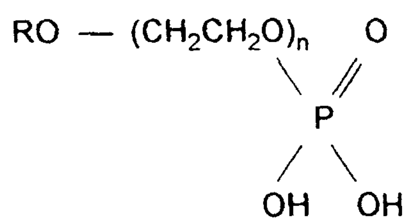

oder

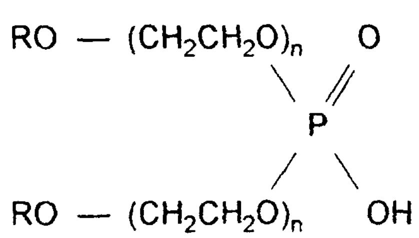

behandelt.

In den US 4 183 879, US 4 209 430 und EP 0 707 051 sind Phosphonate (Salze und Ester von Phosphonsäuren) beschrieben, die als Coating auf Pigmenten aufgebracht, deren Eigenschaften verbessern, insbesondere das "Yellowing" vermeiden sollen.

In der EP 0 073 343 werden Titandioxidpigmente mit einem Organophosphat/Alkanolamin-Additionsprodukt und einem Polyol modifiziert.

Eine chemisch an der Oberfläche der anorganischen Partikel stabil gebundene, vernetzte Struktur wird mit

allen diesen Stoffen nicht erreicht.

In der WO 97/20001 ist auf Seite 2 oben allgemein erläutert, dass nicht reaktive organische Phosphorverbindungen elektrostatisch an der Pigmentoberfläche gebunden sind und bei der Verarbeitung eines solchen Pigments diese organischen Reste vom Pigment desorbieren und ein unerwünschtes Additiv in der Matrix darstellen. Besonders in der Kunststoffverarbeitenden Industrie führen Desorptionseffekte zu Oberflächenstörungen des Kunststoff-Werkstücks und verschlechtern beispielsweise die Bedruckbarkeit und die Verschweißbarkeit ganz erheblich.

Bei allen bisherigen Versuchen, organische Phosphorverbindungen mit reaktiven Gruppen besser an der Partikeloberfläche zu verankern, wurde kein vernetztes Coating aufgebaut. Mit Phosphonaten des Typs $R_1P(O)OR_2OR_3$ ist eine Reaktion mit der Pigmentoberfläche möglich, jedoch können allenfalls zwei Gruppen miteinander eine chemische Bindung eingehen, so dass eine netzartige Ausbildung einer Organophosphonatstruktur wie bei einem Polysiloxan so auch nicht möglich ist.

Die Erfindung betrifft anorganische Partikel mit einer vernetzten organischen Umhüllung durch ein Organopolysiloxan, in das organische Phosphonatverbindungen eingebaut sind und bei dem zumindest die Siliciumatome (über Sauerstoff) weitgehend an die Partikeloberfläche chemisch gebunden sind.

Gegenstand der Erfindung ist auch ein Verfahren zur Herstellung von anorganischen Partikeln, die mit vernetztem organischem Phosphonatosiloxan beschichtet sind.

Gegenstand der Erfindung ist auch die Verwendung von organophosphonatosiloxanbehandelten Pigmenten in Kunststoff- und Lacksystemen, sowie in der Papier- und Faserpigmentierung.

Bei den erfindungsgemäßen anorganischen Partikeln ist die Organophosphonatverbindung nicht adsorptiv an der Oberfläche angelagert, sondern chemisch gebunden. Ohne auf die genaue wissenschaftliche Deutung festgelegt zu sein, hat sich die brauchbare Vorstellung entwickelt, dass in das mit der Oberfläche verbundene, vernetzte Polysiloxan Organophosphonatgruppen chemisch eingebunden sind und obgleich in der Regel keine chemische Bindung direkt vom Phosphoratom zur Partikeloberfläche hin gegeben ist, die Phosphonatgruppe wegen ihrer Bindung an eine oder zwei an der Partikel gebundenen Siliciumgruppen chemisch nicht leicht abgelöst werden kann.

Durch die "Mischung" der Phosphor- und Siliciumgruppen in einem Netz um die anorganische Partikel wird eine gewisse "Elastizität" der Umhüllung erreicht. Es mag auch sein, dass eine der reaktiven Gruppen der Organophosphonatverbindung einmal direkt an der Partikeloberfläche gebunden ist und nur die zweite Funktion mit einer Organosiliciumgruppe verbunden ist, oder dass auch zwei Organophosphonatverbindungen direkt untereinander und mit der Partikeloberfläche verbunden, gleichsam als Insel in einem Polysiloxannetz vorhanden sein können.

Die besonderen Vorteile solcher erfindungsgemäß organisch beschichteter anorganischer Partikel sind darin zu sehen, dass die Phosphor-Kohlenstoff-Bindung sehr stabil ist und deshalb die am Phosphor befindlichen, organischen Substituenten bei der Weiterverarbeitung der Partikel, insbesondere beim Einbau in organische Matrices, nicht mehr abgelöst werden und zugleich die Vielfalt möglicher organischer Reste eine Optimierung der Produkteigenschaften, beispielsweise des hydrophoben/hydrophilen Verhaltens ermöglichen.

Als anorganische Partikel mit einer erfindungsgemäßen organischen Beschichtung kommen insbesonders Pigmente und Füllstoffe in Betracht. Ganz besonders bevorzugt ist die organische Behandlung bei Titandioxidpigmenten, die nach dem Sulfat- oder Chloridverfahren hergestellt sind und die die Anatas- oder Rutilstruktur aufweisen können.

In bevorzugter Weise werden die anorganischen Partikel, bevor sie organisch behandelt werden, anorganisch nachbehandelt, d. h. sie erhalten auf der Partikeloberfläche zunächst eine Beschichtung aus Metalloxiden, -hydroxiden oder - phosphaten. Besonders bevorzugt ist bei Titandioxidpigmenten eine Oberflächenbehandlung mit Aluminiumoxid.

Die mit vernetztem Phosphonatosiloxan (zumindest teilweise) umhüllten anorganischen Partikel können sowohl einheitliche als auch verschiedene organische Reste am Phosphor- und/oder Siliciumatom aufweisen. Am Siliciumatom sind Alkyl-, Alkenyl-, Cycloalkyl- und Arylreste möglich, wobei sie ihrerseits auch mit sauerstoffoder stickstofffunktionellen Resten, wie Amin-, Epoxy- oder Methacrylresten substituiert sein können. In gleicher Weise können die erfindungsgemäß mit dem Polysiloxan verbundenen und/oder an die Partikeloberfläche direkt gebundenen Organophosphonatverbindungen einheitliche oder verschiedene organofunktionelle Reste aufweisen. Für den organischen Rest am Phosphoratom kommen neben den gleichen Resten, wie bei Silanen auch Imin-, Carboxyl- oder Hydroxylreste in Frage. Die Zahl der Kohlenstoffatome beträgt bevorzugt 1 bis 16, bei Cycloalkylgruppen mindestens 5, bei reinen Arylgruppen mindestens 6.

Bei dem erfindungsgemäßen Verfahren zur Herstellung anorganischer Partikel mit chemisch an der Partikeloberfläche gebundenen silicium- und phosphororganischen Verbindungen, wobei diese Verbindungen untereinander überwiegend vernetzt sind, wird von Organosilan- und Organophosphonatverbindungen ausgegangen, die jeweils reaktive Reste aufweisen, wobei die hydrolytische Abspaltung dieser Reste die chemische Fixierung der Verbindung an der Partikeloberfläche bzw. an einer (gebundenen) Nachbargruppe zur Folge hat.

Bekannt und geeignet sind als reaktive Reste für die Organosilanverbindung Alkoxy, Hydroxy, aber auch Halogen. Die reaktiven Reste in der Organophosphonatverbindung sind im Wesentlichen die gleichen wie beim Silan. Darüberhinaus können die Phosphonatverbindungen als Alkali- oder Amoniumsalze vorliegen.

Von besonderem Vorteil ist die Möglichkeit, die Organikschicht um die anorganische Partikel durch die Erfindung breit zu verändern und zu optimieren. Es kommt keineswegs auf ein stöchiometrisches Verhältnis von silicium- und phosphororganischen Verbindungen an, vielmehr können Produkte mit einem unterschiedlichen Anteilsverhältnis, bevorzugt sind Molverhältnisse von 10:1 bis 1:10, und einer unterschiedlichen Menge, bevorzugt sind Gewichtsanteile von 0,05 bis 5 %, bezogen auf die anorganische Partikel, eingesetzt werden. Entsprechende Feineinstellungen werden vom Fachmann vorgenommen, wenn er den Verwendungszweck genau kennt.

Durch die Art und den Anteil der organischen Phosphonatverbindung ist der hydrophile/hydrophobe Charakter einer anorganischen Partikel einstellbar. Verarbeitungstechnische Eigenschaften, wie Dispergierbarkeit, Staubneigung, Benetzbarkeit, Processibility und Lacing, werden durch den Ersatz von siliciumorganischen Gruppen durch phosphororganische Gruppen gezielt verändert. Es wird eine bessere Stabilität ("PVC-Vergrauung") erreicht. Es können sich auch ökonomische Vorteile ergeben.

Die generelle Behandlung des Basismaterials muss durch das erfindungsgemäße Verfahren nicht abgeändert werden; beispielsweise kann bei Titandioxid im Rahmen einer anorganischen Oberflächenbehandlung zunächst eine Schicht aus anorganischen Oxiden wie z. B. $Al_2O_3$, MgO, $SiO_2$, $ZrO_2$, bevorzugt $Al_2O_3$, in der wässrigen Phase aufgebracht werden. Dazu wird eine gegebenenfalls sandgemahlene Titandioxidsuspension, die als Dispergiermittel beispielsweise Polyphosphate, Aminoalkohole oder Acrylate enthalten kann, mit Salzen der anorganischen Oxide, bevorzugt mit Aluminiumsalzen, versetzt und durch Verändern des pH-Werts die entsprechenden Oxidhydrate aufgefällt.

Die Organophosphonate und siliciumorganischen Verbindungen werden in folgender Weise aufgebracht: der pH-Wert einer Titandioxidsuspension wird durch Zugabe üblicher Säuren und Laugen, wie HCl, $H_2SO_4$, NaOH, KOH, auf Werte zwischen 2 und 11, bevorzugt zwischen 3 und 5 eingestellt. Es ist aber auch im Falle einer vorausgegangenen anorganischen Oberflächenbehandlung möglich, durch die Wahl der Behandlungschemikalien und die Behandlungsführung den gewünschten pH-Wert für die organischen Zusätze anzusteuern. Die Temperatur liegt zwischen 20 und 80 °C, wenn die Organika in die wässrige Suspension gegeben werden.

Setzen die Organosilan- und Organophosphonatverbindungen hydrolysebedingt selbst Stoffe, wie beispielsweise Salzsäure bei Chlorsilanen, frei, die zu einer pH-Wertänderung führen, kann eine weitere pH-Korrektur durch Zusatz der oben genannten Chemikalien notwendig werden. Die phosphororganischen und siliciumorganischen Verbindungen werden nicht miteinander vorvermischt, sondern getrennt gleichzeitig oder nacheinander zur Titandioxidsuspension gegeben. Wie bei der Nachbehandlung von Pigmenten allgemein üblich, sind gewisse Haltezeiten verbunden mit Rühren zu beachten.

Als phosphororganische Verbindungen kommen Phosphonate der allgemeinen Formel

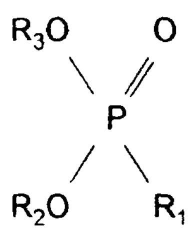

infrage, wobei

$R_1$ ein nicht hydrolysierbarer Alkyl-, Cycloalkyl- oder Arylrest mit 1 bis 16 Kohlenstoffatomen ist, wobei $R_1$ bei reinen Cycloalkylresten mindestens 5 Kohlenstoffatome, bei reinen Arylresten mindestens 6 Kohlenstoffatome aufweist und $R_1$ darüberhinaus an den oben genannten Alkyl-, Cycloalkyl- oder Arylresten noch einen oder mehrere Substituenten, die stickstoff- und/oder sauerstofffunktionell sind, wie Amin-, Imin-, Carboxyl-, Hydroxylreste o. ä. tragen kann (auch Gemische mit unterschiedlichem $R_1$ sind möglich) und

$R_2$ und $R_3$ entweder beide oder einzeln ein Alkylrest, Wasserstoff oder ein einwertiges Metallkation wie z. B. $Na^+$, $K^+$ oder $NH_4^+$ (auch Gemische sind möglich) sein können.

Als siliciumorganische Verbindungen werden Silane der allgemeinen Formel

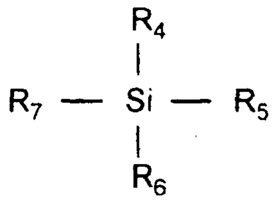

eingesetzt, wobei
$R_4$ ein nicht hydrolysierbarer Alkyl-, Alkylen-, Cycloalkyl- oder Arylrest mit 1 bis 20 Kohlenstoffatomen ist, und $R_4$ bei Alkylenresten mindestens 2 Kohlenstoffatome, bei Cycloalkylresten mindestens 5 Kohlenstoffatome, bei reinen Arylresten mindestens 6 Kohlenstoffatome aufweist und $R_4$ darüberhinaus an den oben genannten Alkyl-, Alkylen, Cycloalkyl- oder Arylresten noch einen oder mehrere Substituenten wie Amino-, Epoxy- oder Methacrylreste tragen kann,
$R_5$, $R_6$ und $R_7$ gleiche oder verschiedene hydrolysierbare Reste aus Alkoxy, Acetoxy, Hydroxy, Halogen oder Mischungen daraus sein können.

Die siliciumorganische Verbindung kann auch aus Silan-Hydrolysaten bestehen, wie sie in der europäischen Patentanmeldung 0 518 057 beschrieben sind

Nach der anorganischen und organischen Behandlung werden mit Hilfe üblicher Verfahren die anorganischen Partikel separiert und getrocknet.

Es ist auch möglich, beispielsweise eine Titandioxidsuspension ohne zu filtrieren und zu waschen direkt einer geeigneten Trocknung, z. B. einer Sprühtrocknung, zuzuführen.

In der Regel erfolgt nach der Trocknung eine Mahlung, wie z. B. eine Dampfstrahlmahlung. Bei dieser Mahlung kann gegebenenfalls der Zusatz weiterer organischer Substanzen, wie Polyalkoholen, siliciumorganischen Substanzen, z. B. Siliconölen oder Silan-Hydrolysaten erfolgen.

Die erfindungsgemäßen anorganischen Partikel, bevorzugt Titandioxidpigmente, können in Kunststoff- und Lacksystemen Anwendung finden, beispielsweise in Polyethylen, Polypropylen, Polybutylen und Copolymeren des Polyethylens, Vinylacetat, Polyvinylchlorid, Polyvinylester, Polystyrol, Polyamid, Polyester, Polyurethan, Polycarbonat, Polyimid, Alkyd, Epoxid.

Besonders bevorzugt ist ein Einsatz in Polyethylen, Polypropylen, Polystyrol und Polyvinylchlorid, insbesondere in der Herstellung von PE-Masterbatches für die Folienextrusion und Papierbeschichtung.

Weitere Einsatzgebiete liegen im Bereich Papier- und Faserpigmentierung.

Die Erfindung wird nachfolgend anhand der Beispiele näher erläutert.

Die Beurteilung der Produkte erfolgt nach Dispergierbarkeit, Ablösbarkeit und Wasserbenetzbarkeit, die im folgenden zunächst kurz beschrieben werden.

Dispergierbarkeitstest

Beim Dispergierbarkeitstest in Polyethylen (PE) wird ein 50 %iges Konzentrat (masterbatch, MB) in PE-LD hergestellt. Zur Bestimmung der Dispergierbarkeit wird der Druckanstieg ermittelt, der sich bei der Extrusion durch ein 25 µm Sieb mit einem Brabender-Meßextruder unter speziellen Prüfbedingungen einstellt:

Zu Beginn eines jeden Versuches werden 400 g PE-LD, MFI (190 °/2,16 kg) = 20 g/10 min, bei einer Schneckendrehzahl von 120 $min^{-1}$ durch das Sieb extrudiert, bis sich ein konstanter Druck $P_1$ einstellt. Ohne Unterbrechung der Extrusion wird anschließend 1 kg des jeweiligen 50 %igen Titandioxidkonzentrates bei gleicher Schneckendrehzahl durch das Siebpaket extrudiert.

Wenn die gesamte Konzentratmenge durch das Sieb extrudiert ist, wird der Extruder kurzzeitig leergefahren, so dass der Druck plötzlich abfällt und somit ein markanter Enddruck $P_2$ abzulesen ist.

Als Maß für den Druckanstieg von 1 kg MB (50 % Titandioxid) gilt:

$$\Delta P = P_2 - P_1$$

Nach jedem Versuch werden Extruder und Siebpaket mit unpigmentiertem PE-LD nachgespült und gereinigt. Nach Ausbau des Siebes wird für den nächsten Versuch ein neues Siebpaket eingesetzt und, wie anfangs beschrieben, weiterverfahren.

Hervorragend geeignete Titandioxidpigmente weisen $\Delta$P-Werte < 50 bar/kg auf.

Ablösbarkeitstest

10 g zu untersuchendes Pigment werden mit 50 ml Methanol p.a. gemischt und bei 60 °C für 4 Stunden digeriert. Anschließend läßt man auf Raumtemperatur abkühlen und zentrifugiert. Die organische Phase wird nach Eindampfen gewogen und im Falle eines meßbaren Rückstands mit Hilfe analytischer Methoden (z. B. FT-IR) untersucht. Das abgetrennte Pigment wird bei 110 °C getrocknet, homogenisiert und der Kohlenstoff- und Phosphorgehalt mit üblichen Methoden bestimmt.

Zur Beurteilung des Ablöseverhaltens dient zum einen die Differenz des Kohlenstoff- bzw. Phosphorgehalts vor ($C_{vor}$ bzw. $P_{vor}$) und nach ($C_{nach}$ bzw. $P_{nach}$) der Extraktion. Bei Differenzen $C_{vor} - C_{nach} < 10$ % bzw. $P_{vor} - P_{nach} < 10$ % wird von einer nicht ablösbaren organischen Verbindung ausgegangen. Zum anderen wird die Menge des Rückstands und deren analytische Zuordnung zur benutzten organischen Verbindung zur Beurteilung des Ablöseverhaltens herangezogen.

Kohlenstoff- bzw. Phosphorretention

Unter Kohlenstoff- bzw. Phosphorretention ist die Wiederfindungsrate der organischen Verbindung zu verstehen, die zur Behandlung angewendet wurde, ausgedrückt als Kohlenstoff- bzw. Phosphorgehalt.

Wasserbenetzbarkeit

Eine kleine Menge Pigment wird auf die Oberfläche von vollentsalztem Wasser (Raumtemperatur) gegeben. Hydrophobe Produkte werden selbst nach Rührung nicht benetzt und bleiben auf der Wasseroberfläche liegen. Hydrophile Produkte sinken sofort unter. Teilhydrophobe Produkte werden nach tropfenweisem Zusatz von Methanol benetzt.

Die Bewertung erfolgt: hydrophob - teilhydrophob - teilhydrophil - hydrophil.

In allen nachfolgenden Beispiele wird ein Titandioxid-Basismaterial, hergestellt nach dem Chlorid-Verfahren, benutzt. Es wird in bekannter Weise unter Einsatz von Hexametaphosphat als Dispergiermittel eine alkalische Suspension hergestellt und in einer Sandmühle gemahlen. Die Pigmente in der Suspension werden in bekannter Weise mit einer $Al_2O_3$-Schicht (0,2 Gew% bezogen auf Titandioxid) versehen.

Beispiel 1 (Vergleichsbeispiel)

Eine sandgemahlene Titandioxidsuspension wird unter Rührung bei pH 7,25 ± 0,25 mit 0,2 % eines Alkaliphosphonats mit dem Handelsnamen LOPON WN® der BK Giulini Chemie versetzt und nach einer Retentionszeit von 60 Minuten filtriert, mit Wasser gewaschen und getrocknet. Im Anschluß erfolgt eine in der Titandioxid-Industrie übliche Dampfstrahlmahlung. Das so erhaltene Pigment wird den oben angeführten Tests unterzogen. Zu den Ergebnissen siehe Tabelle 1.

Beispiel 2 (Vergleichsbeispiel)

Eine sandgemahlene Titandioxid-Suspension wird unter Rührung bei pH 7,25 ± 0,25 mit 0,4 % Octyltrichlorsilan versetzt und zur Konstanthaltung des pH-Wertes auf dem oben genannten Niveau wird 10 %ige NaOH zugegeben. Nach einer Retentionszeit von 60 Minuten wird das Titandioxid abfiltriert, gewaschen und getrocknet. Es folgt eine in der Titandioxid-Industrie übliche Dampfstrahlmahlung. Das so erhaltene Pigment wird den oben angeführten Tests unterzogen. Zu den Ergebnissen siehe Tabelle 1.

Beispiel 3

Zu einer sandgemahlenen Titandioxid-Suspension werden unter Rührung bei pH 7,25 ± 0,25 gleichzeitig, aber getrennt 0,4 % Octyltrichlorsilan und 0,2 % Alkaliphosphonat LOPON WN® gegeben. Zur Konstanthaltung des pH-Wertes im oben genannten Bereich erfolgt ein Zusatz von 10 %iger NaOH. Nach einer Retentionszeit von 60 Minuten wird das Titandioxid abfiltriert, gewaschen und getrocknet. Es folgt eine Dampfstrahlmahlung. Das so erhaltene Pigment wird den oben angeführten Tests unterzogen. Zu den Ergebnissen siehe Tabelle 1.

Beispiel 4

Durchführung wie Beispiel 3, jedoch mit dem Unterschied, dass 0,5 % Octyltrichlorsilan und 0,1 % Alkaliphosphonat LOPON WN® eingesetzt werden.

Wie den Beispielen 3 und 4 im Vergleich zu Beispielen 1 und 2 zu entnehmen ist, lässt sich durch die gemischte organische netzartige Umhüllung der Pigmente eine sehr gute Dispergierbarkeit erzielen. Dabei ist die Wasserbenetzbarkeit individuell einstellbar. Die Retention liegt in beiden Fällen über 90 %, was durch die chemische Bindung der organischen Phosphorgruppe entweder direkt oder über Silicium am Pigment bedingt ist.

Beispiel 5

Zu einer sandgemahlenen Titandioxid-Suspension wird unter Rührung eine Natriumaluminatlösung gegeben, deren Menge 0,2 % $Al_2O_3$ äquivalent ist. Der pH-Wert soll bei dem Zusatz 8 bis 9 nicht überschreiten. Nach der Zugabe und 10 Minuten Retentionszeit erfolgt eine Einstellung des pH-Wertes auf 7,5 ± 0.25 mit 10 %iger HCl. Bei diesem pH-Wert werden gleichzeitig und weiterhin unter Rührung 0,5 % Octyltrichlorsilan und 0,2 % LOPON WN® gegeben. Zur Konstanthaltung des pH- Wertes im genannten Bereich erfolgt ein Zusatz von 10 %iger NaOH. Nach einer Retentionszeit von 60 Minuten wird das Titandioxid abfiltriert, gewaschen und getrocknet. Es folgt eine Dampfstrahlmahlung. Das so erhaltene Pigment wird den oben angeführten Tests unterzogen. Zu den Ergebnissen siehe Tabelle 2.

Beispiel 6

Analog Beispiel 5 erfolgt eine anorganische Behandlung mit 0,2 % $Al_2O_3$. Nach einer 10 minütigen Retentionszeit wird zunächst Octyltrichlorsilan zugesetzt bis der pH-Wert in den Bereich 4,25 ± 0,25 gefallen ist. Danach wird während des Zusatzes des verbleibenden Octyltrichlorsilans durch Zugabe 10 %iger NaOH dieser pH-Bereich konstant gehalten. Die Gesamtmenge Octyltrichlorsilan beträgt 0,5 %. Dann wird in dem genannten pH-Bereich 0,1 % Alkaliphosponat LOPON WN® zugesetzt. Nach einer Retentionszeit von 60 Minuten wird weiter so verfahren, wie im Beispiel 5 beschrieben. Zu den Ergebnissen siehe Tabelle 2. Die organische Behandlung bei einem pH-Wert im Bereich von 3 bis 5 zeigt Vorteile bei der Retention der Verbindungen.

Beispiel 7

Analog Beispiel 5 erfolgt eine Behandlung mit 0,2 % $Al_2O_3$. Nach der 10 minütigen Retentionzeit wird der pH-Wert durch Zugabe von 10 %iger HCl auf 7,25 ± 0,25 gestellt. Anschließend erfolgt die gleichzeitige nicht vorvermischte Zugabe von 0,5 % Octyltriethoxysilan und 0,2 % 1-Hydroxyethan-1,1-diphosphonsäure. Der pH-Wert wird während der Zugabe durch 10 %ige NaOH im oben genannten Bereich eingestellt. Nach der Retentionszeit von 60 Minuten wird das Titandioxid abfiltriert, gewaschen, getrocknet und auf einer Labormühle gemahlen. Zur C/P-Retention, Wasserbenetzbarkeit und Ablösbarkeit siehe Tabelle 2.

Beispiel 8

Es wird verfahren wie im Beispiel 7. Bei pH 7.5 ± 0.25 erfolgt die gleichzeitige Zugabe von 0,5 % Octyltriethoxysilan und 0,2 % Natrium-N-Octylamin-N,N-bis (methylenphosphonat). Der pH-Wert wird während der Zugabe durch Zugabe von 10 %iger HCl im oben genannten Bereich eingestellt. Es wird weiterverfahren wie im Beispiel 7 beschrieben.

Die Beispiele 7 und 8 zeigen, dass die hydrophilen/hydrophoben Eigenschaften durch die Wahl bestimmter, funktioneller Phosphonate beeinflusst werden können. Nachteilig stellt sich die geringe Retention der Organika dar.

**Tabelle 1**

| Beispiel | organische Behandlungs-substanz(en) | C/P-Retention | Dispergierbarkeits-test (bar/kg $TiO_2$) | Wasserbenetzbar-keit | Ablösbarkeit |
|---|---|---|---|---|---|
| 1 | Alkaliphosphonat 0,2 % | 80 % | 640 | hydrophil | < 10 % |
| 2 | Octyltrichlorsilan 0,4 % | > 90 % | 42 | hydrophob | < 10 % |
| 3 | Alkaliphosphonat und Octyltrichlorsilan 0,2 %/0,4 % | > 90 % | 23 | teilhydrophil | < 10 % |
| 4 | Alkaliphosphonat und Octyltrichlorsilan 0,1 %/0,5 % | > 90 % | 25 | teilhydrophob | < 10 % |

**Tabelle 2**

| Beispiel | anorganische Behandlungs-substanz | organische Behandlungs-substanzen | C/P-Retention | Dispergierbarkeits-test (bar/kg $TiO_2$) | Wasserbenetz-barkeit | Ablösbar-keit |
|---|---|---|---|---|---|---|
| 5 | 0,2 % $Al_2O_3$ | Alkaliphosphonat und Octyltrichlorsilan 0,2 % / 0,5 % | > 90 % | 49 | teilhydrophob | < 10 % |
| 6 | 0,2 % $Al_2O_3$ | Alkaliphosphonat und Octyltrichlorsilan 0,1 % / 0,5 % | >>90 % | 25 | teilhydrophob | < 10 % |
| 7 | 0,2 % $Al_2O_3$ | 1-Hydroxyethan-1,1-diphosphonsäure und Octyltriethoxysilan 0,2 / 0,5 % | > 80 % | nicht geprüft | hydrophil | < 10 % |
| 8 | 0,2 % $Al_2O_3$ | Na-N-Octylamin-N,N-bis (methylenphosphonsäure) und Octyltriethoxysilan 0,2 % / 0,5 % | > 65 % | nicht geprüft | hydrophob | < 10 % |

## Patentansprüche

1. Anorganische Partikel, beschichtet mit wenigstens einer reaktiven Organosilanverbindung, wobei wegen deren Reaktivität die Organosilanverbindungen untereinander und mit der Partikeloberfläche chemische Bindungen eingegangen sind und ein organisches Polysiloxan an der Partikel chemisch gebunden ist,
**dadurch gekennzeichnet,**
**dass** die reaktive Organosilanverbindung ein Silan der allgemeinen Formel

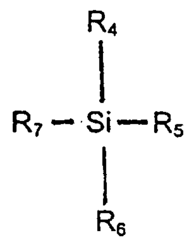

ist, wobei $R_4$ ein nicht hydrolisierbarer Alkyl-, Alkylen-, Cycloalkyl- oder Arylrest mit 1 bis 20 Kohlenstoffatomen ist, und $R_4$ bei Alkylenresten mindestens 2 Kohlenstoffatome, bei reinen Arylresten mindestens 6 Kohlenstoffatome aufweist (auch Gemische mit unterschiedlichem $R_4$ sind möglich) und bei $R_4$ darüber hinaus ein oder mehrere Wasserstoffatome durch stickstoff- und/oder sauerstofffunktionelle Reste wie Amino, Epoxy oder Methacryl substituiert sein können, und $R_5$, $R_6$ und $R_7$ gleiche oder verschiedene Reste aus Alkoxy, Acetoxy, Halogen oder Mischungen daraus sein können,
und **dass** ein Teil der reaktiven Organosilanverbindungen durch reaktive Organophosphonatverbindungen ersetzt ist.

2. Anorganische Partikel nach Anspruch 1, **dadurch gekennzeichnet,**
**dass** zwischen der Partikel und der organischen Verbindung wenigstens eine weitere Schicht aus einem Metalloxid oder -phosphat oder -oxyhydrat vorhanden ist.

3. Anorganische Partikel nach Anspruch 1 oder 2 **dadurch gekennzeichnet,**
**dass** die reaktive Organophosphonatverbindung ein Phosphonat der allgemeinen Formel

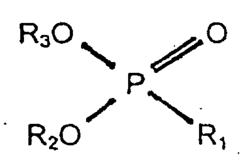

ist, wobei R, ein nicht hydrolisierbarer Alkyl-, Cycloalkyl- oder Arylrest mit 1 bis 16 Kohlenstoffatomen ist, wobei R, bei reinen Cycloalkylresten mindestens 5 und bei reinen Arylresten mindestens 6 Kohlenstoffatome aufweist (auch Gemische mit unterschiedlichem R1 sind möglich) und $R_2$ und $R_3$ entweder beide oder einzeln ein Alkylrest, Wasserstoff, ein einwertiges Metallkation oder Ammonium (auch Gemische sind möglich) sein können.

4. Anorganische Partikel nach Anspruch 3, **dadurch gekennzeichnet,**
**dass** beim Rest $R_1$ ein oder mehrere Wasserstoffatome durch stickstoffund/oder sauerstofffunktionelle Reste wie Amin, Imin oder Hydroxyl substituiert sind.

5. Anorganische Partikel nach einem oder mehreren der Ansprüche 1 bis 4,
**dadurch gekennzeichnet,**
**dass** die Partikel mit einheitlichen Organosilan- und einheitlichen Organophosphatverbindungen umhüllt sind.

6. Anorganische Partikel nach einem oder mehreren der Ansprüche 1 bis 4,
**dadurch gekennzeichnet,**
**dass** die Partikel mit Gemischen verschiedener Organosilan- und/oder Organophosphatverbindungen umhüllt sind.

**7.** Anorganische Partikel nach einem oder mehreren der Ansprüche 1 bis 6,
**dadurch gekennzeichnet,**
**dass** das Mol-Verhältnis der Organosilanverbindungen zu Organophosphatverbindungen zwischen 10:1 und 1: 10 variiert.

**8.** Anorganische Partikel nach einem oder mehreren der Ansprüche 1 bis 7,
**dadurch gekennzeichnet,**
**dass** die Beschichtungsmenge der anorganischen Partkel mit Organosilanverbindungen und Organophosphatverbindungen 0,05 bis 5 % (bezogen auf das Gewicht der anorganischen Partikel) beträgt.

**9.** Verfahren zur Herstellung von anorganischen Partikeln gemäß einem oder mehreren der Ansprüche 1 bis 8 **gekennzeichnet durch** folgende Schritte:

a) Dispergieren der anorganischen Partikel in einer wässrigen Lösung;
b) Einstellen eines pH-Wertes im Bereich 2 bis 11, bevorzugt 3 bis 5;
c) getrennte Zugabe der reaktiven Organosilan- und reaktiven Organophosphonatverbindungen;
d) Nachstellen des pH-Wertes;
e) Rühren der Suspension;
f) Filtrieren, Waschen, Trocknen und Mahlen der anorganischen Partikel.

**10.** Verfahren nach Anspruch 9, **dadurch gekennzeichnet,**
**dass** von Titandioxidpigmenten, die nach dem Sulfat- oder Chloridverfahren hergestellt worden sind und die eine Anatas- oder Rutilstruktur aufweisen, ausgegangen wird.

**11.** Verfahren nach Anspruch 9 oder 10, **dadurch gekennzeichnet,**
**dass** die anorganischen Partikel einer Nassmahlung, z.B. einer Sandmahlung, unterzogen werden.

**12.** Verfahren nach Anspruch 9, 10 oder 11, **dadurch gekennzeichnet,**
**dass** die anorganischen Partikel vor der Beschichtung mit reaktivem Organosilan und reaktiven Organophosphonatverbindungen mit Oxiden oder Phosphaten, bevorzugt mit $Al_2O_3$ der Menge 0,1 bis 0,5 Gew.-% bezogen auf die anorganischen Partikel, behandelt werden.

**13.** Verfahren nach Anspruch 9, 10, 11 oder 12, **dadurch gekennzeichnet,**
**dass** die anorganischen Partikel nach dem Trocknen dampfgemahlen werden.

**14.** Verwendung der anorganischen Partikel nach einem oder mehreren der Ansprüche 1 bis 8 in Kunststoffsystemen oder Lacksystemen.

**15.** Verwendung der anorganischen Partikel nach einem oder mehreren der Ansprüche 1 bis 8 im Bereich der Papier- und Faserpigmentierung.

## Claims

**1.** Inorganic particles, coated with at least one reactive organosilane compound, in which on account of their reactivity, the organosilane compounds have entered into chemical bonds with one another and with the particle surface and an organic polysiloxane has bonded to the particle **characterized by** the fact
that the reactive organosilane compound is a silane of the general formula

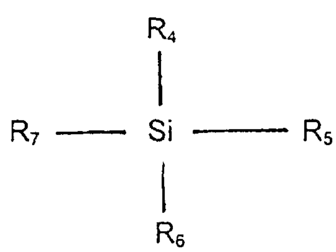

in which $R_4$ is a non-hydrolyzable alkyl, alkylene, cycloalkyl or aryl residue with 1 to 20 carbon atoms, and $R_4$ exhibits in the case of alkylene residues at least 2 carbon atoms, with pure aryl residues at least 6 carbon atoms (also mixtures with different $R_4$ are possible) and in the case of $R_4$ moreover 1 or 2 hydrogen atoms can be substituted by nitrogen and/or oxygen functional residues as amino, epoxy or methacryl, and $R_5$, $R_6$ and $R_7$ can be the same or different residues from among alkoxy, acetoxy, halogen or mixtures thereof and that a part of the reactive organosilane compounds is replaced by reactive organophosphate compounds.

2. Inorganic particles according to Claim 1, **characterized by** the fact that between the particle and the organic coating at least one additional layer is present from among a metal oxide or phosphate or oxide hydrate.

3. Inorganic particles according to Claim 1 or 2, **characterized by** the fact that the reactive organophosphonate compound is a phosphonate of the genera! formula

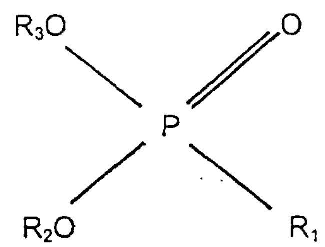

in which $R_1$ is a non-hydrolyzable alkyl, cycloalkyl or aryl residue with 1 to 16 carbon atoms, in which R, exhibits in the case of pure cycloalkyl residues at least 5 and in the case of pure aryl residues at least 6 carbon atoms (also mixtures with different $R_1$ are possible) and $R_2$ and $R_3$ can be either both or individually an alkyl residue, hydrogen, a univalent metal cation or ammonium (also mixtures are possible).

4. Inorganic particles according to Claim 3, **characterized by** the fact that in the residue $R_1$ one or several hydrogen atoms are substituted by nitrogen and/or oxygen functional residues as amine, imine or hydroxyl.

5. Inorganic particles according to one or several of Claims 1 to 4 **characterized by** the fact that the particles are coated with uniform organosilane and uniform organophosphonate compounds.

6. Inorganic particles according to one or several of Claims 1 to 4 **characterized by** the fact that the particles are coated with mixtures of various organosilane and/or organophosphonate compounds.

7. Inorganic particles according to one or several of Claims 1 to 6 **characterized by** the fact that the mol ratio of the organosilane compounds to the organophosphonate compounds varies between 10:1 and 1:10.

8. Inorganic particles according to one or several of Claims 1 to 7 **characterized by** the fact that the coating quantity of the inorganic particle with organosilane and organophosphonate compounds amounts to 0.05 to 5 % (based on the weight of the inorganic particle).

9. Process for the preparation of inorganic particles according to one or several of Claims 1 to 8 **characterized by** the following steps:

a) Dispersing the inorganic particles in an aqueous solution;
b) Adjusting the pH value in the range of 2 to 11, preferably 3 to 5;
c) Separate addition of the reactive organosilane and reactive organophosphonate compounds;
d) Post-adjusting the pH value;
e) Stirring the suspension;
f) Filtering, washing, drying and grinding the inorganic particles.

10. Process according to Claim 9, **characterized by** the fact

that it proceeded from titanium dioxide, which had been prepared according to the sulfate or chloride process and exhibited an anatase or rutile structure.

**11.** Process according to Claim 9 or 10, **characterized by** the fact that the inorganic particles are submitted to a wet grinding, for example a sand grinding.

**12.** Process according to Claim 9, 10 or 11, **characterized by** the fact that before the coating with reactive organosilane and reactice organophosphonate compounds the inorganic particles were treated with oxides or phosphates, preferably with $Al_2O_3$ of the quantity 0.1 to 0.5 % by weight based on the inorganic particles.

**13.** Process according to Claim 9, 10, 11 or 12, **characterized by** the fact that the inorganic particles are steam-milled after the drying.

**14.** Use of the inorganic particles according to one or several of Claims 1 to 8 in plastics systems or paint systems.

**15.** Use of the inorganic particles according to one or several of Claims 1 to 8 in the area of paper and fiber pigmenting.

## Revendications

**1.** Particules inorganiques revêtues d'au moins un composé d'organosilane réactif, les composés d'organosilane ayant donné naissance à des liaisons chimiques entre eux et avec la surface des particules à cause de leur réactivité, et un polysiloxane organique étant lié chimiquement à la particule,
**caractérisées par le fait**
**que** le composé d'organosilane réactif est un silane de formule générale

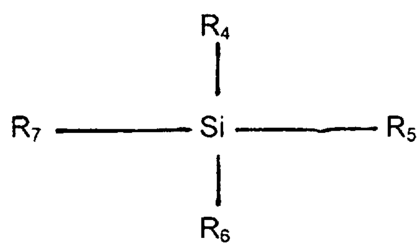

$R_4$ étant un reste non hydrolysable d'alcyle, d'alcylène, de cycloalcyle ou d'aryle avec 1 à 20 atomes de carbone, et $R_4$ présentant au moins 2 atomes de carbone pour les restes d'alcyle et au moins 6 atomes de carbone pour les restes d'aryle purs (des mélanges avec un $R_4$ différent sont aussi possibles), et en outre pour $R_4$, un ou plusieurs atomes d'hydrogène pouvant être substitués par des restes ayant la fonction de l'azote et/ou de l'oxygène tels qu'amino, époxy ou méthacryl, et $R_5$, $R_6$ et $R_7$ pouvant être des restes identiques ou différents d'alcoxy, d'acétoxy, d'halogène ou des mélanges de ceux-ci,
et **qu'**une partie des composés d'organosilane réactifs est remplacée par des composés d'organophosphonate réactifs.

**2.** Particules inorganiques selon la revendication 1, **caractérisées par le fait qu'**il existe entre la particule et le composé organique au moins une autre couche constituée d'un oxyde, d'un phosphate ou d'un oxyhydrate métallique.

**3.** Particules inorganiques selon la revendication 1 ou 2 **caractérisées par le fait**
**que** le composé organophosphonaté réactif est un phosphonate de formule générale

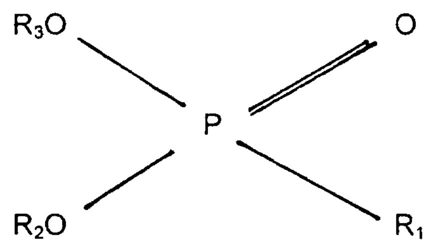

$R_1$ étant un reste non hydrolysable d'alcyle, de cycloalcyle ou d'aryle avec 1 à 16 atomes de carbone, $R_1$ présentant au moins 5 atomes de carbone pour les restes de cycloalkyle purs et au moins 6 atomes de carbone pour les restes d'aryle purs (des mélanges avec un $R_1$ différent sont aussi possibles) et $R_2$ et $R_3$ pouvant être ensemble ou individuellement un reste d'alkyle, de l'hydrogène, un cation de métal monovalent ou de l'ammonium (des mélanges sont aussi possibles).

**4.** Particules inorganiques selon la revendication 3, **caractérisées par le fait que** dans le $R_1$ restant, un ou plusieurs atomes d'hydrogène sont substitués par des restes ayant la fonction de l'azote et/ou de l'oxygène tels qu'amine, imine ou hydroxyle.

**5.** Particules inorganiques selon une ou plusieurs des revendications 1 à 4,
**caractérisées par le fait**
**que** les particules sont enrobées de composés d'organosilane uniformes et de composés d'organophosphate uniformes.

**6.** Particules inorganiques selon un ou plusieurs des revendications 1 à 4,
**caractérisées par le fait**
**que** les particules sont enrobées de mélanges de différents composés d'organosilane et/ou d'organophosphate.

**7.** Particules inorganiques selon une ou plusieurs des revendications 1 à 6,
**caractérisées par le fait**
**que** le rapport molaire entre les composés d'organosilane et les composés d'organophosphate varie entre 10:1 et 1:10.

**8.** Particules inorganiques selon une ou plusieurs des revendications 1 à 7,
**caractérisées par le fait**
**que** la quantité de composés d'organosilane et de composés d'organophosphate qui revêt les particules inorganiques représente 0,05 à 5 % du poids de celles-ci.

**9.** Procédé de fabrication de particules inorganiques conformément à une ou plusieurs des revendications 1 à 8, **caractérisé par** les étapes suivantes :

a) dispersion des particules inorganiques dans une solution aqueuse ;
b) ajustement du pH dans le domaine de 2 à 11, de préférence de 3 à 5 ;
c) addition séparée des composés d'organosilane réactifs et des composés d'organophosphonate réactifs ;
d) correction du pH ;
e) agitation de la suspension ;
f) filtration, lavage, séchage et broyage des particules inorganiques.

**10.** Procédé selon la revendication 9, **caractérisé par le fait**
**que** l'on part de pigments de dioxyde de titane qui ont été fabriqués selon le procédé au sulfate ou au chlorure et qui présentent une structure anatase ou rutile.

**11.** Procédé selon la revendication 9 ou 10, **caractérisé par le fait**
**que** les particules inorganiques sont soumises à un broyage humide, p. ex. un broyage au sable.

**12.** Procédé selon la revendication 9, 10 ou 11, **caractérisé par le fait**

**que** les particules inorganiques sont traitées, avant le revêtement avec l'organosilane réactif et les composés d'organophosphonate réactifs, avec des oxydes ou des phosphates, de préférence avec de l'$Al_2O_3$, à raison de 0,1 à 0,5 % du poids des particules inorganiques.

**13.** Procédé selon la revendication 9, 10, 11 ou 12, **caractérisé par le fait que** les particules inorganiques sont broyées à la vapeur après le séchage.

**14.** Emploi des particules inorganiques selon une ou plusieurs des revendications 1 à 8 dans des systèmes de matières synthétiques ou de peintures.

**15.** Emploi des particules inorganiques selon une ou plusieurs des revendications 1 à 8 dans le domaine de la pigmentation de papier et de fibres.